# EUROPEAN PATENT SPECIFICATION

(11) **EP 0 520 522 B1**
(45) Date of publication and mention of the grant of the patent: **18.05.1994**
(21) Application number: 92114489.5
(22) Date of filing: 26.08.1992
(51) Int. Cl.: B66F 7/08

(54) **Hydraulic lifting truck having a shear support**
Hydraulisch betätigter, auf Scheren gestützter Hebewagen
Chariot de levage actionné hydrauliquement et supporté par des ciseaux

(30) Priority: 01.10.1991 DK 1682/91
(43) Date of publication of application: 30.12.1992
(73) Proprietor: NISAP MASKINFABRIK A/S, DK-6760 Ribe (DK)
(72) Inventor: Pedersen, Erling, DK-6760 Ribe (DK)
(74) Representative: Nielsen, Leif

(56) References cited:
- DE-A- 3 642 700
- FR-A- 990 485
- US-A- 2 300 165

## Description

### Background of the Invention

The present invention relates to a hydraulic lifting truck having a shear support and comprising
two forks which at the one end are connected to a bracket which includes a piston cylinder unit supported at its lower end by a wheel frame, and
two pairs of shears intended for supporting each of the two forks and where the one shear at the one end is hinged to the wheel frame of the bracket and at the other end is provided with a roll which supports the underside of the fork and where the other shear at the one end is hinged to the back end of the fork and at the other end is provided with a travelling roller and an extension extending past the travelling roller for forming a thrust pad upon which the lifting truck rests when the shears occupy a predetermined steep position by lifting the forks.

Lifting trucks of this type will be used for the transportation and lifting of goods in industrial companies. Compared to power-driven lifting trucks or fork-lift trucks they have the advantage that they may be manually operated and are easier to handle. During transportation the lifting trucks rest on the wheels which are located in the travelling frame of the bracket and on the travelling rollers which are situated at the front end of the underside of the forks. Moreover, the lifting trucks act as lifting tables for the delivery or the removal of goods in working height. The lifting and lowering is effected hydraulically either by means of an electric pump or manually by working a pump lever which is also used as a drawbar when driving the lifting truck.

For lifting goods the forks can be lowered to a distance of approximately 90 mm from the support which position permits it to lift a standard pallet loaded with goods. In a lifted state the forks can be lifted to a height of approximately 800 mm from the support where the forks can thus act as a working or lifting table. Such lifting trucks are known e.g. from the description of Danish patent Application No. 6152/87 where the lifting truck has been provided with thrust pads in the form of extensions which extend past the travelling rollers of the shears. When the shears occupy a predetermined position the lifting truck will consequently rest on the thrust pads and the travelling rollers will be clear of the ground. Hereby the risk of such accidents is reduced which may occur as a result of the lifting truck starting to move when being in its lifted position.

Thus the known lifting truck provides a stable support when the lifting truck is used as a lifting table. However, when used as a lifting table displacements in the centre of gravity of the cargo may occur, e.g. as a result of goods being positioned or removed in such a way that a major quantity of goods will be positioned at the front end of the forks. If the goods are placed in such a way that the total centre of gravity of the goods and the lifting truck is displaced beyond the supporting surface of the thrust pad the lifting truck may tilt forwards. This tilting will occur without forewarning and may involve a risk for the persons near by. Even though the lifting trucks are provided with signs warning against the risk of tilting in case of a displacement of the centre of gravity the risk of tilting is not eliminated.

Is is the object of the present invention to remedy the drawbacks associated with the known lifting trucks in a simple way and to provide a lifting truck where the user is forewarned about the risk of tilting.

According to the present invention this is obtained with a lifting truck of the type mentioned in the introductory part which is characterized in that each of the thrust pads has at its underside a first supporting surface which is used as standard supporting surface when the forks are lifted,
a second supporting surface which is situated farther from the travelling roller and extending upwards under an acute angle relative to the plane in which the first supporting surface is included, and a third supporting surface which is situated farthest from the travelling roller and provided in continuation of the first and the second supporting surfaces and which extends upwards under an acute angle relative to the plane in which the second supporting surface is included.

With a lifting truck made in this way the first supporting surface of the thrust pad will rest on the support in a manner known per se when the shears are in a predetermined steep position during the lifting movement of the forks. At this predetermined steep position the load of the lifting truck is transferred to the thrust pads while the pressure on the travelling rollers is relieved. At the lifting movement the support of the lifting truck is moved from the travelling rollers and the wheel in the bracket to the thrust pads at the travelling rollers and thrust pads, if any, which are situated in a similar way at the end of those shears which are pivotally secured to the travelling frame of the bracket.

The lifting truck starts to move readily when the forks are in a low position where the forks slope very gently.

When the lifting truck is in its lifted position and is used as a lifting table, the second and third supporting surfaces of a thrust pad will be clear of the support which supporting surfaces extend forwards in the direction away from the shear to which the thrust pad is connected. If a displacement of the centre of gravity takes place during the use of the lifting truck as a lifting table, e.g. because goods are removed from the back of the forks or because goods are delivered to the front end of the forks, the lifting truck will tilt forward. However, only a very small tilting takes place as a new stable situation occurs when the second supporting surface of the thrust pads abuts the support. In this position the wheel or thrust pad of the bracket will be lifted a distance from the support and the user has now been forewarned about the risk of tilting. Consequently, the user can reduce the risk of tilting either by reallocating the goods on the forks or by lowering the forks so that the shears occupy a less steep position following which the centre of gravity is again displaced within the first supporting surface of the thrust pad.

According to an advantageous embodiment the thrust pads are pivotally embedded around the travelling rollers. In this embodiment a limited rotating movement is obtained by means of a stopper which is situated on the thrust pad and which co-operates with the terminal surface of the shear. Hereby the thrust pads can be kept clear of the support during ordinary driving of the lifting truck and druing incipient lifting of the forks. When the thrust pad at a predetermined steep position (with a more gentle slope than required for the stable support of the thrust pads) is positioned against the support a brake action occurs. The stable support of the thrust pad does not take place until a continuous lifting movement occurs when the shears occupy a more steep position. Alternatively, the supporting effect of the thrust pads will also occur if a displacement of the goods takes place in this situation thereby introducing the risk of the lifting truck tilting forwards. In this embodiment an extra forewarning is thus obtained, viz. at a first tilting where the lifting truck tilts and is supported in a stable way on the first supporting surface. This forewarning is followed by the forewarning which results when the lifting truck tilts further and reaches the stable support on the second supporting surface.

If the displacement of the centre of gravity continues after a first forewarning triggered by the small tilting movement where the thrust pad rests on the second supporting surface, a further tilting takes place following which the third supporting surface of the thrust pads abuts the support. In this situation the tilting is very significant as the third supporting surface has an approximately punctiform extension and in this position the lifting truck will be in a state of equilibrium where only a negligibly small force will cause complete tilting. However, a situation where the support abuts the third supporting surface of the thrust pad is not very likely to occur as the user will react on the forewarning given when the lifting truck tilts the first time and reaches the stable supporting state on the second supporting surface.

The invention will now be further explained with reference to the accompanying drawing in which
- Figs. 1-4: show side views of a lifting truck according to the invention illustrating four situations for a stable support in normal use, stable support after a forewarning, a state of equilibrium with the risk of tilting, respectively, in a situation where a tilting has taken place, and
- Figs. 5-7: show partial side views on an enlarged scale illustrating a thrust pad in the three situations illustrated in Figs. 1-3.

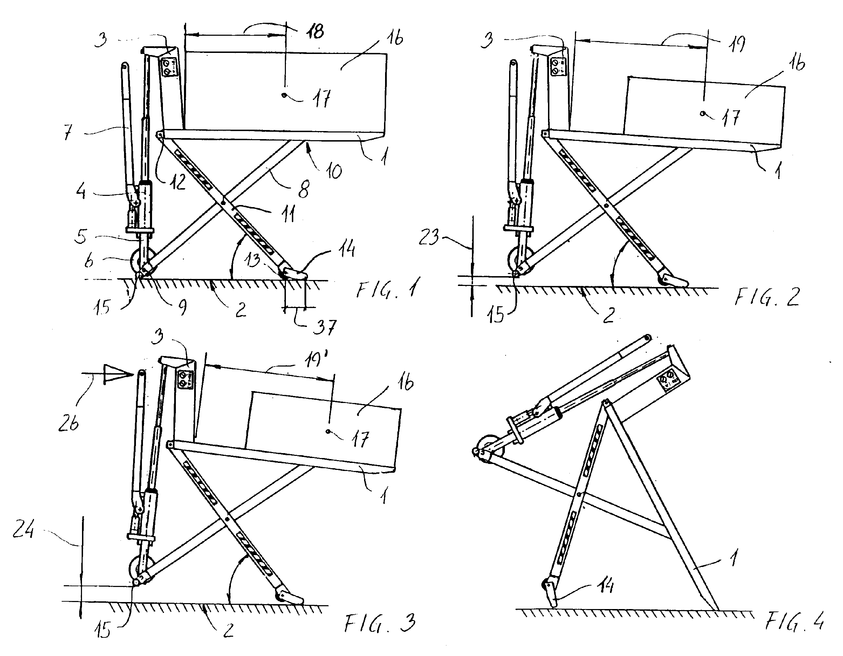

Figs. 1-4 show a lifting truck which in a known way is provided with two forks 1 which can be lowered from the lifted position shown in the Figures to a lower position (not shown) where the forks are located immediately above a supporting surface 2. In a possible, not shown position the forks may have a height of 90 mm above the floor while the forks in the lifted position shown may have a height of 800 mm above the support 2.

At their rearmost end the forks 1 are connected by means of a bracket 3 which also supports a hydraulic cylinder piston unit 4 which at the lower end is connected to a wheel frame 5 in which a wheel 6 is mounted upon which the lifting truck rests in its lowered position. The cylinder piston unit 4 is activated by means of a grip 7 which is also used as a control lever when driving the lifting truck.

The forks 1 are secured in a chosen lifted position by means of a shear support comprising two pairs of shears (one of the pairs is shown in the Figure). At its one end the one shear 8 is hinged to the wheel frame 5 by a joint 9. At the other end 10 the shear 8 is provided with a roll (not shown) which supports the underside of the fork 1. The other shear 11 is hinged to the rearmost end of the fork 1 by a joint 12. At its frontmost lower end the shear 11 is provided with a travelling roller 13 and an extension extending beyond the travelling roller 13 and which forms a thrust pad 14 upon which the lifting truck rests when the shears occupy a predetermined steep position as shown in Fig. 1. In the embodiment shown the first shear is also connected with a thrust pad 15 which is located at an extension extending beyond the joint 9. In the position shown in Fig. 1 the lifting truck will be in a stable supporting position resting on the thrust pads 14,15.

The forks 1 support goods 16 and a centre of gravity 17 for the goods 16 is at a distance 18 from the bracket 3 so that the total centre of gravity of the goods 16 as well as the lifting truck is located within the supporting area of the shear support. In Fig. 1 the distance 37 indicates the increase of the distance to an overturn point brought about by the thrust pad 14.

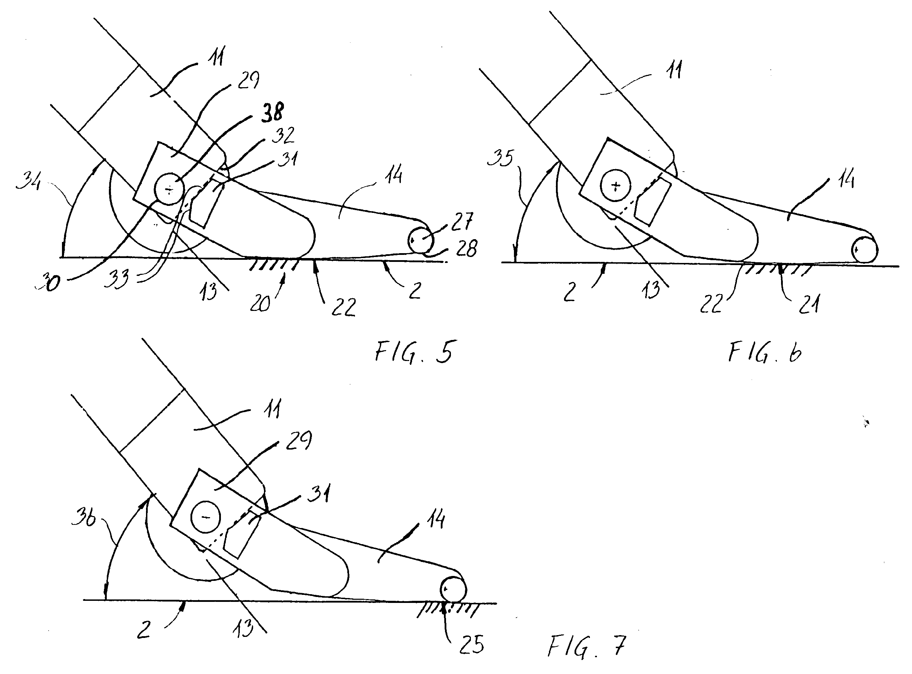

When the load of the goods 16 on the forks 1 is changed, e.g. by removing a part of the goods nearest the bracket 3 as shown in Fig. 2, a displacement of the centre of gravity 17 of the goods 16 occurs so that the goods are now at a distance 19 from the bracket 3. This displacement may cause the displacement of the total centre of gravity for the lifting truck and the goods 16 beyond the overturn point brought about by the thrust pad in the stable state illustrated in Fig. 1. In the following an explanation is given of the changed situation in connection with a description of the detailed view of the thrust pad in Figs. 5-7. Fig. 5 shows that in the position where a stable support is obtained as illustrated in Fig. 1, the thrust pad 14 rests on a first supporting surface 20 at the underside of the thrust pad 14. In continuation of the first supporting surface the thrust pad 14 comprises a second supporting surface 21 which is situated farther from the travelling roller 13 and extends upwards under an angle relative to the plane which includes the first supporting surface 20. When the total centre of gravity for the lifting truck and the goods 16 is displaced beyond the stable support made by the first supporting surface 20, the thrust pad 14 tilts around a line 22 that separates the first supporting surface and the second supporting surface 21. Hereby the thrust pad occupies a new stable state with the supporting surface 21 abutting the support 2. By the tilting around the line 22 at the underside of the thrust pad, the rearmost end of the lifting truck is lifted a small distance 23 from the support 2. Hereby the user has been forewarned that a tilting is imminent and he may then choose to displace the centre of gravity 17 of the goods 16 towards the rearmost part of the forks or to lower the forks 1 in such a way that the total centre of gravity is again within an area where the stable state which is shown in Fig. 1 is reinstated.

If contrary to expectation the user does not react to the forewarning issued by the tilting of the lifting truck to the position shown in Fig. 2 a very small displacement of the centre of gravity 17 of the goods 16 a short distance 19' from the bracket 3 will cause the lifting truck to reach the position shown in Fig. 3 where the thrust pad 15 now is lifted to a higher distance 24 above the support 2. In this situation a very unstable state of equilibrium is established as the thrust pad rests on the third supporting surface 25 at the outermost end of the thrust pad 14 as shown in Fig. 7.

The third supporting surface 25 is situated under a small angle relative to the plane which includes the second supporting surface 21. In this situation even a quite small force 26 (See Fig. 3) applied to the grip of the lifting truck or a quite small further displacement of the centre of gravity on the lifting truck and the goods 16 will cause the forward tilting of the lifting truck to the position shown in Fig. 4.

Fig. 4 shows an almost unimaginable situation where a user has ignored the forewarning given in the position shown in Fig. 2, and moreover, the unstable state of equilibrium which is illustrated in Fig. 3 has been exceeded. The lifting truck has tilted forwards and rests on the point of the forks 1 and on the outermost point of the thrust pad 14. For the sake of clearness no goods are shown in Fig. 4.

As it appears from Figs. 5-7 the thrust pad 14 may be provided with a stay bolt 27 extending perpendicularly outwards from the side of the thrust pad 14 and the underside 28 being provided approximately in the plane which includes the third supporting surface 25. Hereby a lateral stability of the lifting truck is obtained. The thrust pad is pivotally embedded around its shaft 38 of the travelling roller 13. The embedding is provided by means of two flanges 29 (only one is shown) which pass on either side of the shear 11 and which is provided with a bore 30 through which the shaft 38 passes. Between the two flanges 29 a stopper 31 is shaped which co-operates with the terminal surface 32 of the shear 11 in order to reduce the rotating movement of the thrust pad 14. Seen from the top side of the thrust pad the two flanges 29 form a U where the bottom of the U is constituted by the stopper 31. The stopper 31 may be made from sheets which are welded onto the inside of each flange 29, onto one of the flanges 29 or extend across the entire distance between the flanges 29 and thus constitute an end bottom in the U formed. The stopper 31 is made with two stop surfaces 33 extending obliquely inwards from the top side and the underside of the thrust pad 14 and in the direction where the pull of the travelling roller is provided. A swivelling embedding of the thrust pad 14 will trigger a double forewarning as described in the introductory part of the specification.

As it appears in particular from Figs. 5-7 the thrust pad, as seen from the side, is substantially banana-shaped having an edged profile at the underside. The angles between the edged profile formed by the supporting surfaces may be from approximately 1° to 5°. In a practical example the angle 34, which the shear 11 forms with the support in the stable state, may be 43°, and the angle 35, which the shear forms with the support in the stable forewarning position in Fig. 6, may then be within the range of 43-47°. The angle 36, which the shear 11 forms with the support 2 may be 48° in the unstable state of equilibrium shown in Fig. 3.

With the stated sizes for the angles 34-36 the lifting height 23 and 24 for the position of the thrust pad 15 over the support will be 60 mm, respectively 100 mm. These lifting heights will give the user a clear indication of the imminent risk of tilting. With the stated data and if the goods 16 placed on the forks 1 weigh 500 kg, the force indicated in Fig. 3 will only have to be about 30 N to cause the complete tilting shown in Fig. 4.

## Claims

1. Hydraulic lifting truck having a shear support and comprising
two forks (1) which at the one end are connected to a bracket (3) which includes a piston cylinder unit (4) supported at its lower end by a wheel frame (5), and
two pairs of shears (8,11) intended for supporting each of the two forks (1) and where the one shear (8) at the one end is hinged to the wheel frame (5) of the bracket and at the other end (10) is provided with a roll which supports the underside of the fork (1) and where the other shear (11) at the one end is hinged (12) to the back end of the fork (1) and at the other end is provided with a travelling roller (13) and an extension extending past the travelling roller (13) for forming a thrust pad (14) upon which the lifting truck rests when the shears occupy a predetermined steep position by lifting the forks, wherein each of the thrust pads (14) has at its underside a supporting surface (20) which is used as standard supporting surface when the forks are lifted, **characterized** in that
a second supporting surface (21) which is situated farther from the travelling roller (13) and extending upwards under an acute angle relative to the plane in which the first supporting surface (20) is included, and a third supporting surface (25) which is situated farthest from the travelling roller (13) and provided in continuation of the first (20) and the second (21) supporting surfaces and which extends upwards under an acute angle relative to the plane in which the second supporting surface (21) is included.

2. Lifting truck according to claim 1, **characterized** in that the angle between the first (20) and the second (21) supporting surface is comprised within the range of about 1° to approximately 5°.

3. Lifting truck according to claims 1 or 2, **characterized** in that the angle between the second (21) and the third (25) supporting surface is comprised within the range of about 1° to approximately 5°.

4. Lifting truck according to any one of the preceding claims, **characterized** in that the third supporting surface (25) of the thrust pad has a substantially shorter extension than the first (20) and second (21) supporting surface in the longitudinal direction of the shear.

5. Lifting truck according to any one of the preceding claims, **characterized** in that perpendicularly to the orientation of the thrust pads (14) in the longitudinal direction of the shear stay bolts (27) projecting towards the sides are secured against the sides, the undersides (28) of the stay bolts being situated approximately in the plane where the third supporting surface (25) of the thrust pads is included.

6. Lifting truck according to any one of the preceding claims, **characterized** in that each thrust pad (14) is pivotally embedded around its travelling roller (13) and that the rotating movement of the thrust pad (14) is reduced by means of a stopper (31) secured on the thrust pad which stopper is intended for engagement with the terminal surface (32) on the shear (11).

7. Lifting truck according to any one of the preceding claims, **characterized** in that the thrust pad (14) is made of an elongated unit which, seen from the side, is substantially banana-shaped having an edged profile at the underside where the supporting surfaces (20,21,25) are formed, that at the one end of the elongated unit the thrust pad (14) has two projecting flanges (29) so that, as seen from the upper side of the thrust pad (14), a substantially U-shaped configuration is made and that each of the two flanges (29) is provided with bores (30) for the pivotal connection of the thrust pad around its travelling roller (13).

8. Lifting truck according to claims 6 or 7, **characterized** in that the stopper (31) is constituted of the end bottom in the U provided between the flanges (29) which bottom is formed with two surfaces which from the top side and underside of the thrust pad (14) extend obliquely inwards and towards the travelling roller (13).

## Patentansprüche

1. Hydraulischer Hubwagen mit einer Scherenstütze und umfassend zwei Gabeln (1), die an dem einen Ende mit einem eine an ihrem unteren Ende von einem Radgestell (5) unterstütze Hubkolbenzylindereinheit (4) enthaltenden Träger (3) verbunden sind, und zwei Paaren von Scherenarmen (8, 11), die zum Unterstützen von jeder der beiden Gabeln (1) gedacht sind, und bei dem der eine Scherenarm (8) an dem einen Ende gelenkig mit dem Radgestell (5) des Trägers verbunden ist und an dem anderen Ende (10) mit einer die Unterseite der Gabel (1) unterstützenden Walze versehen ist und bei dem der andere Scherenarm (11) an dem einen Ende gelenkig mit dem hinteren Ende der Gabel (1) verbunden ist und an dem anderen Ende mit einer Verfahrrolle (13) und einem sich über die Verfahrrolle (13) hinaus erstreckenden Fortsatz versehen ist zum Bilden eines Druckstückes (14), auf dem der Hubwagen ruht wenn die Scheren eine festgelegte, steile Stellung durch Anheben der Gabeln einnehmen, bei dem jedes der Druckstücke (14) an seiner Unterseite eine Unterstützungsfläche (20) aufweist, die als Normalunterstützungsfläche verwendet wird, wenn die Gabeln angehoben sind, gekennzeichnet durch eine weiter von der Verfahrrolle (13) entfernt angeordnete und sich bezüglich der Ebene, in der die erste Unterstützungsfläche (20) enthalten ist, unter einem spitzen Winkel nach oben erstreckende, zweite Unterstützungsfläche (21) und eine am weitesten von der Verfahrrolle (13) entfernt angeordnete und in Fortsetzung der ersten Unterstützungsfläche (20) und der zweiten Unterstützungsfläche (21) vorgesehene und sich bezüglich der Ebene, in der die zweite Unterstützungsfläche (21) enthalten ist unter einem spitzen Winkel nach oben erstreckende, dritte Unterstützungsfläche (25).

2. Hubwagen nach Anspruch 1, dadurch gekennzeichnet, daß der Winkel zwischen der ersten Unterstützungsfläche (20) und der zweiten Unterstützungsfläche (21) im Bereich von etwa 1° bis näherungsweise 5° enthalten ist.

3. Hubwagen nach Anspruch 1 oder 2, dadurch gekennzeichnet, daß der Winkel zwischen der zweiten Unterstützungsfläche (21) und der dritten Unterstützungsfläche (25) im Bereich von etwa 1° bis näherungsweise 5° enthalten ist.

4. Hubwagen nach einem der vorhergehenden Ansprüche, dadurch gekennzeichnet, daß die dritte Unterstützungsfläche (25) des Druckstückes in der Längsrichtung des Scherenarms eine wesentliche kürzere Ausdehnung aufweist als die erste (20) und die zweite (21).

5. Hubwagen nach einem der vorhergehenden Ansprüche, dadurch gekennzeichnet, daß lotrecht zur Orientierung der Druckstücke (14) in der Längsrichtung des Scherenarms in seitlicher Richtung vorspringende Ankerbolzen (27) sicher an den Seiten befestigt sind, wobei die Unterseiten (28) der Ankerbolzen näherungsweise in der Ebene angeordnet sind, in der die dritte Unterstützungsfläche (25) der Druckstücke enthalten ist.

6. Hubwagen nach einem der vorhergehenden Ansprüche, dadurch gekennzeichnet, daß jedes Druckstück (14) schwenkbar um seine Verfahrrolle (13) eingebaut ist und daß die Drehbewegung des Druckstückes (14) mit Hilfe eines sicher auf dem Druckstück befestigten Stoppers (31) eingeschränkt ist, wobei der Stopper zum Angreifen an die Endfläche (32) des Scherenarms (11) gedacht ist.

7. Hubwagen nach einem der vorhergehenden Ansprüche, dadurch gekennzeichnet, daß das Druckstück (14) aus einer von der Seite betrachtet im wesentlichen bananenformigen, langlichen Einheit hergestellt ist mit einem kantigen Profil an der Unterseite, an der die Unterstützungsflächen (20, 21, 25) gebildet sind, daß das Druckstück (14) an dem einen Ende der länglichen Einheit zwei vorspringende Flansche (29) aufweist, so daß von der Oberseite des Druckstückes (14) betrachtet eine im wesentlichen U-förmige Anordnung gebildet ist, und daß jeder der beiden Flansche (29) mit Bohrungen (30) versehen ist zur Schwenkverbindung des Druckstückes um seine Verfahrrolle (13).

8. Hubwagen nach Anspruch 6 oder 7, dadurch gekennzeichnet, daß der Stopper (31) vom Endboden in dem zwischen den Flanschen (29) geschaffenen U gebildet ist, wobei der Boden mit zwei Flächen gebildet ist, die sich von der Oberseite und der Unterseite des Druckstückes (14) schräg nach innen und in Richtung auf die Verfahrrolle (13) erstrecken.

## Revendications

1. Chariot élévateur actionné hydrauliquement et supporté par des ciseaux, comprenant deux fourches (1) qui, à une extrémité, sont reliées à un bras (3) qui comprend un vérin (4) supporté, à son extrémité inférieure, par une chaise (5) de roue et deux paires de ciseaux (8, 11) destinés à supporter chacune des deux fourches (1), l'un (8) des ciseaux, à l'une des extrémités, étant articulé à la chaise (5) de roue du bras et, à l'autre extrémité (10), étant pourvu d'un rouleau qui supporte la face inférieure de la fourche (1), et l'autre ciseau (11), à l'une des extrémités, étant articulé (12) à l'extrémité arrière de la fourche (1) et, à l'autre extrémité, étant pourvu d'un galet mobile (13) et d'une extension s'étendant au-delà du galet mobile (13) pour former un patin (14) recevant la poussée, sur lequel le chariot élévateur repose lorsque les ciseaux sont dans une position inclinée prédéterminée après avoir soulevé les fourches, chacun des patins (14) recevant la poussée présentant, sur sa face inférieure, une surface de support (20) qui est utilisée comme surface de support standard lorsque les fourches sont levées, caractérisé en ce qu'une deuxième surface de support (21) située plus loin du galet mobile (13) et s'étendant vers le haut, selon un angle aigu par rapport au plan dans lequel la première surface de support (20) est comprise et une troisième surface de support (25) située le plus à distance du galet mobile (13), faisant suite aux première (20) et deuxième (21) surfaces de support et s'étendant vers le haut selon un angle aigu par rapport au plan dans lequel la deuxième surface de support (21) est comprise.

2. Chariot élévateur selon la revendication 1, caractérisé en ce que l'angle entre la première (20) et la deuxième (21) surface de support est compris entre environ 1° et environ 5°.

3. Chariot élévateur selon les revendications 1 ou 2, caractérisé en ce que l'angle entre la deuxième (21) et la troisième (25) surface de support est compris entre environ 1° et environ 5°.

4. Chariot élévateur selon l'une quelconque des revendications précédentes, caractérisé en ce que la troisième surface de support (25) du patin recevant la poussée a une extension sensiblement plus courte que la première (20) et la deuxième (21) surfaces de support, dans la direction longitudinale du ciseau.

5. Chariot élévateur selon l'une quelconque des revendications précédentes, caractérisé en ce que, perpendiculairement à l'orientation des patins (14) recevant la poussée, dans la direction longitudinale du ciseau, des tiges d'appui (25) dépassant en direction des côtés sont fixées contre les côtés, les faces inférieures (28) des tiges d'appui étant situées approximativement dans le plan dans lequel est comprise la troisième surface de support (25) des patins recevant la poussée.

6. Chariot élévateur selon l'une quelconque des revendications précédentes, caractérisé en ce que chaque patin (14) recevant la poussée est encastré de façon pivotante autour de son galet mobile (13) et en ce que la rotation du patin (14) recevant la poussée est réduite, au moyen d'un butoir (31) fixé sur le patin recevant la poussée, butoir qui est destiné à coopérer avec la surface terminale (32) du ciseau (11).

7. Chariot élévateur selon l'une quelconque des revendications précédentes, caractérisé en ce que le patin (14) recevant la poussée est constitué d'une unité allongée qui, vue de côté, a sensiblement la forme d'une banane avec un profil à arêtes vives, au niveau de la face inférieure où les surfaces de support (20, 21, 25) sont formées, en ce qu'à l'une des extrémités de l'unité allongée le patin (14) recevant la poussée présente deux brides (29) dépassant de telle sorte que, vu à partir de la face inférieure du patin (14) recevant la poussée, une configuration sensiblement en forme de U est obtenue, et en ce que chacune des deux brides (29) est pourvue de perçages (30) permettant la liaison pivotante du patin recevant la poussée autour de son galet mobile (13).

8. Chariot élévateur selon les revendications 6 ou 7, caractérisé en ce que le butoir (31) est formé dans le fond du U ménagé entre les brides (29), fond qui est formé par deux surfaces qui, à partir de la face supérieure et inférieure du patin (14) recevant la poussée, s'étendent de façon oblique vers l'intérieur et en direction du galet mobile (13).
